# EUROPEAN PATENT APPLICATION

(11) **EP 4 730 126 A1**
(43) Date of publication of application: **22.04.2026**
(21) Application number: 24207017.5
(22) Date of filing: 16.10.2024
(51) Int. Cl.: G06F 9/48, G06F 9/50, G06N 3/045

(54) **PROCESSING METHOD AND PROCESSING SYSTEM UTILIZING A MULTI-CORE NEURAL NETWORK ACCELERATOR**

(71) Applicant: aiMotive Kft., 1025 Budapest (HU)
(72) Inventor: Fenyvesi, Péter, 1191 Budapest (HU); Bajánházy, Tamás János, 1035 Budapest (HU); Kalydi, Balázs, 1035 Budapest (HU)
(74) Representative: Kereszty, Marcell

(57) **Abstract**

The invention is a processing method for carrying out a first processing task flow and at least one further processing task flow on a multi-core neural network accelerator having processing units (11, 12), a command scheduler, and a memory, wherein each processing task flow comprises commands (20, 21, 22, 23) and dependencies between at least some of the commands (20, 21, 22, 23). Each command (20, 21, 22, 23) is executed by one particular processing unit (11, 12) by being scheduled by the command scheduler to the particular processing unit (11, 12) for execution. The scheduling of the commands (20, 21, 22, 23) is determined by a merged command schedule, maintaining the dependencies within the respective processing task flows and reducing idle times of the processing units (11, 12). The invention also relates to a processing system, a computer program product, and a computer-readable medium for carrying out the method. (Fig. 5)

## Description

### TECHNICAL FIELD

The subject matter disclosed herein relates to a processing method, a processing system, a computer program product, and a computer-readable medium for carrying out a first processing task flow and at least one further processing task flow on a multi-core neural network accelerator. More particularly, the disclosed subject matter relates to systems and methods for reducing execution time and latency by enabling interleaved multitasking in multi-core neural network accelerators, e.g., in the field of image processing.

### BACKGROUND ART

Neural networks can be used effectively to solve complex problems that are difficult or impossible to handle using traditional mathematical methods. However, running neural networks on a conventional computer is an extremely resource-intensive process, primarily due to structural differences between neural networks and conventional computers. Therefore, target hardware platforms, so-called neural network accelerator architectures have been developed on which neural networks can be run efficiently. Such hardware provides the same or even a higher computing performance at a lower power consumption than a traditional GPU.

Most neural network accelerator architectures have multiple processing units, in other words, processing cores. Multi-core neural network accelerator hardware solutions are generally known in the art and are used for executing neural network workloads, or in other words, processing task flows generally consisting of up to hundreds or thousands of basic commands distributed on the cores. Neural network accelerator architectures can have identical or specialized processing units; in the second case, for example, some units can be specialized for performing convolution, and other parts can carry out pooling and other functions.

In the case of image processing, the multi-core neural network accelerator hardware executes a neural network on an input image. The execution of the neural network, on a given input image, at a given resolution, will determine a workload. This workload is divided into many commands with dependencies between them. It is not possible to perform the processing of the commands in any order, but the independent commands can be executed in parallel. As the accelerator has more than one core, the commands can be scheduled/distributed between the cores to a certain level.

US 2021/0303346 A1 discloses a system and a method for queuing commands in a deep learning processor. A queue processor cooperates with a scheduler (part of a software compiler), which generates a static schedule of a parallel process for execution by the multicore processor system, including the queue processor based on a directed acyclic graph representing the dependencies between tasks in the process. The scheduler can calculate a number of command streams that can be utilized for execution of the parallel process based on the topography of the directed acyclic graph, the resources of the multicore processor system, and a user's power consumption and performance (e.g., inference time, memory utilization) specifications.

US 2022/0207783 A1 discloses a real-time low latency computer vision/machine learning compute accelerator with a smart convolutional neural network scheduler. This known solution aims to address the problem of processing one continuous image stream with as small latency as possible, requires close integration of the camera/image provider driver/API and the processing hardware (GPU), and uses runtime optimization based on the arrival time of input image slices. Furthermore, this known solution is tailored for GPUs, where every compute unit is identical, so it does not matter which work item is executed on which compute unit.

In parallelizing the commands between several cores, a problem can easily arise, namely that the cores must wait for each other due to the dependencies of the commands. For instance, it is often the case in such processing that results of convolutions are to be processed via pooling operations, meaning that convolution operations are to be carried out on processing units of a first type, and pooling the results on processing units of a second type can be started only after the results of the convolutions are available. Such dependencies can also be present in the case of subsequent operations on the same type, e.g., subsequent convolution operations, between processing units of the same type. Therefore, due to synchronization dependencies between these commands, which can be considered as defining a computational graph, there may be idle times when a core cannot execute any command and has to wait for another core(s).

The known methods do not solve the problems of these idle times. Thus, there is a need for a solution that allows for improvement over existing methods and systems. There is a need for a processing method, a processing system, a computer program product, and a computer-readable medium, eliminating as much as possible the shortcomings of known techniques. There is a particular need for a solution that is based on compiling the command execution into automatic scheduling that reduces the idle times of the processing units in case more than one processing task flow is to be carried out.

### DISCLOSURE OF INVENTION

It is an object of the invention to provide an efficient interleaved, practically simultaneous processing of two or more processing task flows by a multi-core neural network accelerator, thereby reducing idle times of the processing units and, in turn, reducing the total processing time. Another objective of the invention is to improve the utilization of the cores with respect to idle times. It is a further object of the invention to provide a solution that is based on compiling the command execution into a scheduling that reduces idle times of the processing units in case more than one processing task flow is to be carried out.

The above and other objects have been achieved by the processing method according to claim 1, by the processing system according to claim 9, by the computer program product according to claim 10, and by the computer-readable medium according to claim 11. Preferred embodiments are defined in the dependent claims. The invention reduces idle times of the processing units when multiple workloads are scheduled to run concurrently on a single processing hardware, i.e., on one neural network accelerator. The invention achieves better utilization of the processing units by interleaved compiling the neural network functions, more specifically, the corresponding processing task flows, into a merged command schedule. Therefore, the invention is a compile-time optimization; the runtime part of the solution is straightforward and is carried out in line with the compiled commands. The invention works on a hardware architecture in which more than one computing core (processing unit) is present in the accelerator, and the distribution of the commands is determined by the compiling step.

The basic idea of the invention is to schedule additional commands into the cores when idle points are reached in the execution. This can be done by scheduling into the idle intervals commands of another, independent processing task flow, e.g., by starting the processing of another image or frame. The processed task flows are independent of each other in the sense that there are no dependencies between the processing commands belonging to different processing task flows. More generally, two or more processing workloads are merged into a single workload for the neural network accelerator.

### BRIEF DESCRIPTION OF DRAWINGS

Characteristics, objectives, and advantages of embodiments of the subject matter will become apparent from the following description, which is given solely by way of illustration, is non-limiting, and is to be read with reference to the appended drawings in which
Fig. 1 schematically illustrates a general embodiment of a multi-core neural network accelerator;
Fig. 2 schematically illustrates an example of a command schedule compiled for execution;
Fig. 3 schematically illustrates a scheduler and processing units of a multi-core neural network accelerator, as well as a time diagram of command processing of the command schedule of Fig. 2;
Fig. 4 schematically illustrates the processing units of Fig. 3 and a time diagram of command processing of the command schedule of Fig. 2 on serial execution on two frames/images;
Fig. 5 schematically illustrates the processing units of Fig. 3 and a time diagram of command processing of the command schedule of Fig. 2 on interleaved execution on two frames/images;
Fig. 6 schematically illustrates the merged command schedule compiled for execution according to Fig. 5;

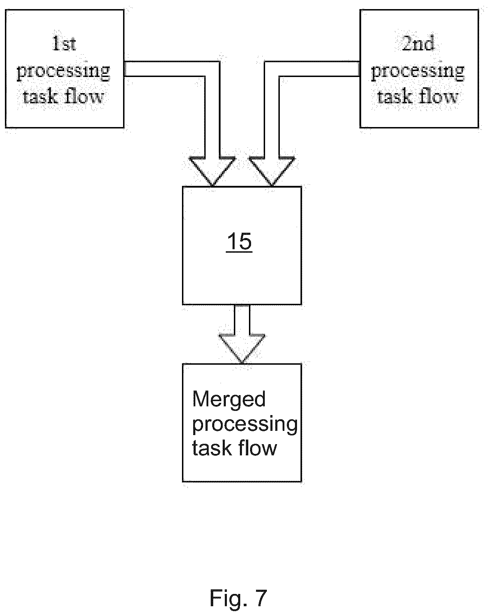

Fig. 7 schematically illustrates the functioning of a command schedule merger unit;
Fig. 8 schematically illustrates another example of serial processing of two frames by a multi-core neural network accelerator;
Fig. 9 schematically illustrates another example of an interleaved processing of two frames by the multi-core neural network accelerator as of Fig. 8;
Fig. 10 illustrates a schematic example of processing two frames of two cameras with the same neural network, according to the invention; and
Fig. 11 illustrates a schematic example of processing two frames of two cameras with two neural networks, according to the invention.

### MODES FOR CARRYING OUT THE INVENTION

The subject matter disclosed herein comprises a processing method for carrying out a first processing task flow and at least one further processing task flow on a multi-core neural network accelerator. In the following, an exemplary image processing is described for use as the method, as well as exemplary suitable architectures and further exemplary details.

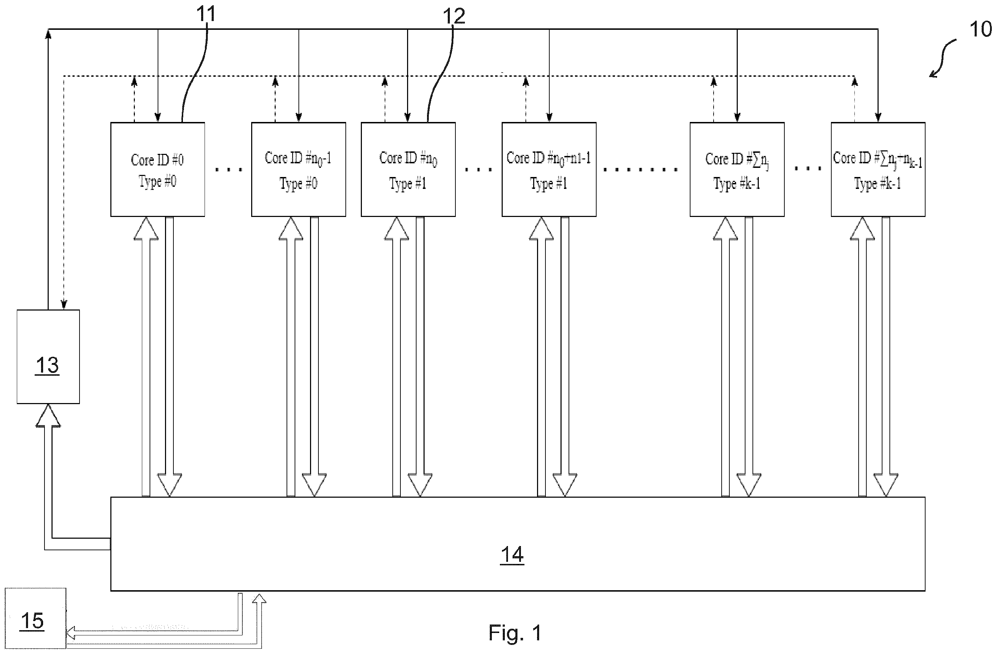

Fig. 1 illustrates a diagram of a generalized hardware architecture of a multi-core neural network accelerator 10. The system comprises multiple numbers of processing units 11, 12, typically of multiple types, a command scheduler 13 and a memory 14. The scheduler 13 is connected to the memory 14, and it can read a command schedule from it. The processing units 11, 12 also have individual respective connections with the memory 14 to read data inputs required for command execution and to write respective data outputs or command execution results. The command scheduler 13 schedules commands (in other words, command executions) on the processing units 11, 12, as denoted by solid line arrows, and when a command execution is ready, the processing unit 11, 12 notifies the scheduler 13 about result availability, as denoted by dashed line arrows. The scheduler 13 schedules the next and subsequent commands by taking into account such result-availability information. Thus, each command is executed by one particular processing unit 11, 12 by being scheduled by the command scheduler 13 to the particular processing unit 11, 12 for execution.

Each processing task flow comprises said commands and dependencies between at least some of the commands of the processing task flow.

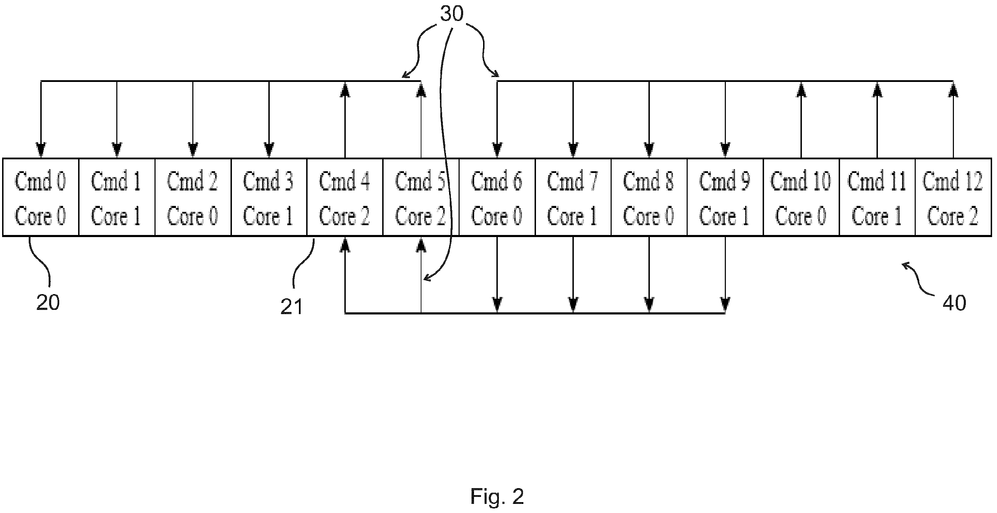

Fig. 2 illustrates an example of a command schedule 40 compiled for execution. The command schedule 40 is stored in the memory 14 for scheduling command execution, each command 20, 21 being executable by one specific processing unit 11, 12 and being assigned to that one specific processing unit 11, 12, as indicated in Fig. 2 by Core # indications below Cmd # command numbers. Dependencies 30 are marked with arrows, wherein each arrow points from a dependent command to the command(s), on the results of which it depends.

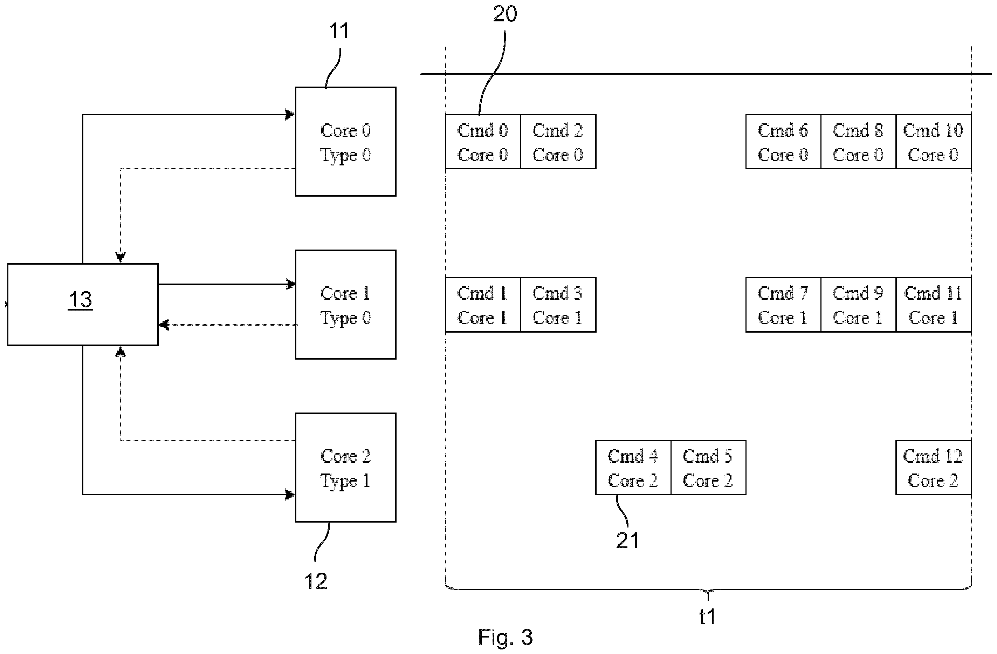

Fig 3. illustrates the scheduler 13 and the processing units 11, 12 of an exemplary multi-core neural network accelerator 10, as well as a time diagram of command processing of the command schedule 40 of Fig. 2. Again, the command scheduler 13 schedules the commands 20, 21 on the processing units 11, 12, as denoted by the solid line arrows, and when a command execution is ready, the processing unit 11, 12 notifies the scheduler 13 about result-availability, as denoted by the dashed line arrows. As depicted in the example, the dependencies 30 between the commands 20, 21 mean that commands 20, 21 for a specific processing unit 11, 12 must be executed in that order as they are in the command schedule 40. The command schedule 40 of Fig. 2 is fed to the scheduler 13 or is read from the memory 14 by the scheduler 13, which distributes the processing to the processing units 11, 12, taking the dependencies 30 into account. Fig. 3 illustrates that there are gaps in the timeline for each processing unit 11, 12, the gaps representing idle periods when the respective processing unit 11, 12 has nothing to do. The total processing time of the command schedule 40 of Fig. 2 is t1; in a particular experiment, t1 = 11.9 ms.

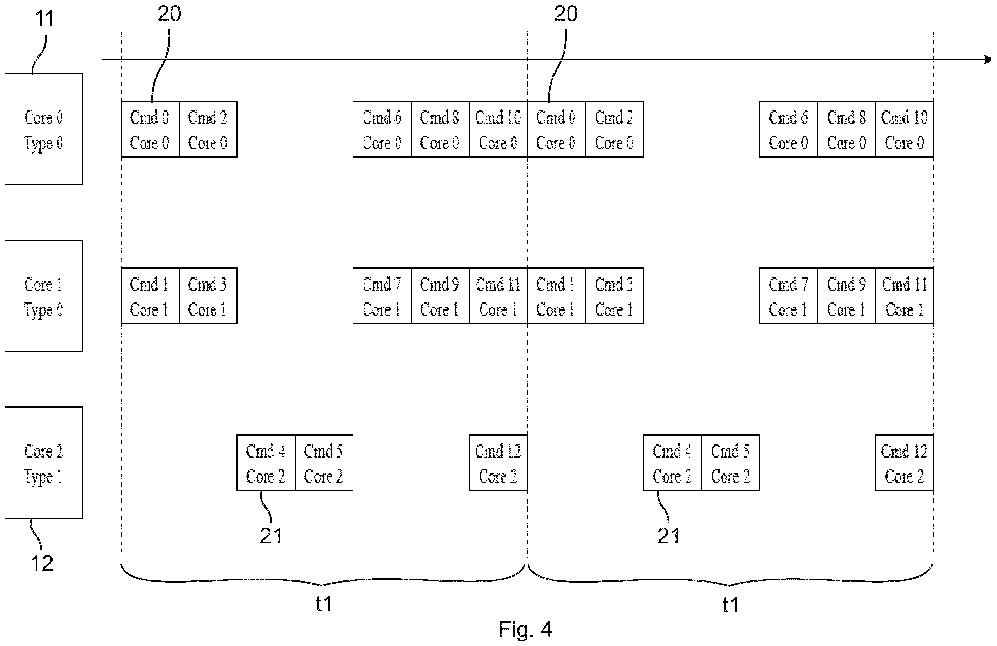

Fig. 4 illustrates the processing units of Fig. 3 and a time diagram of command processing of the command schedule 40 of Fig. 2 in a serial execution on two frames/images. In the serial execution, firstly, the first frame is processed, and when it is finished, the second one is processed; there is no parallelism between these processing tasks. As it can be seen, the workload according to Fig. 3 is executed twice, sequentially, which takes twice the time, i.e., here the total processing time is t1+t1; being 23.8 ms in the given example.

However, if we consider the above as one workload, then commands from the second image can be scheduled when the first commands for the first frame reach their dependency limit and the cores go to idle. Thereby, a batch of two frames can be created as a merged workload to achieve a better scheduling and to increase core utilization.

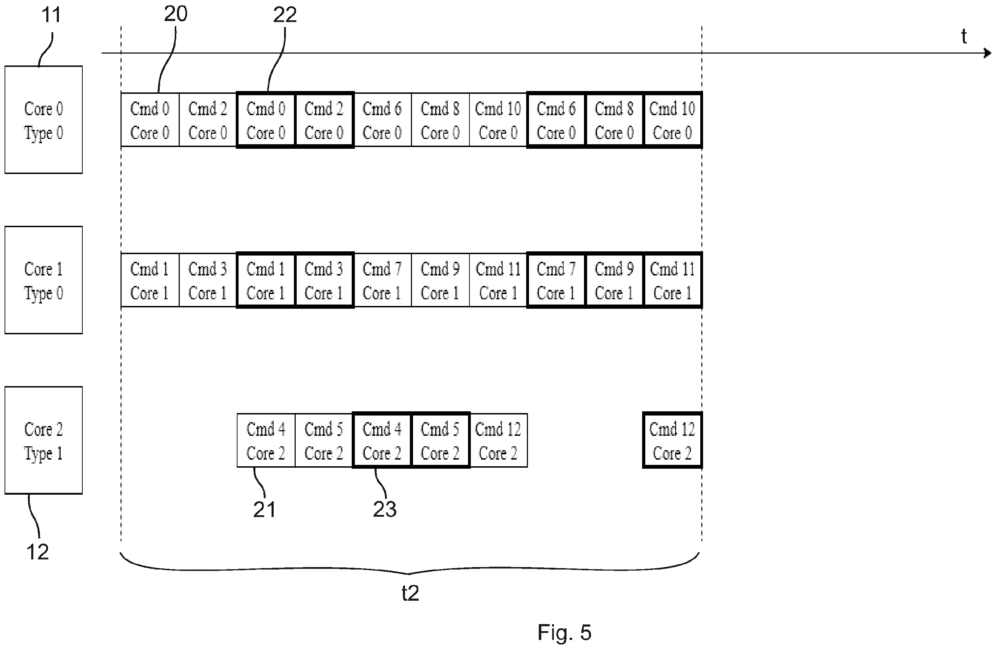

As illustrated in Fig. 5, according to a first aspect of the invention, a processing method is provided for carrying out a first processing task flow and at least one further processing task flow on the multi-core neural network accelerator 10, preferably having at least one processing unit 11 of a first type and at least one processing unit 12 of a second type different from the first type. The processing task flows comprise commands 20, 21, 22, 23; each command 20, 21, 22, 23 is to be executed by one specific processing unit 11, 12, which is assigned to the particular command 20, 21, 22, 23 by means of command scheduling.

Each processing task flow further comprises dependencies 30. The dependencies 30 comprise a first result-availability which is an availability of one or more results written into the memory 14 by a first subset of the processing units 11, 12. The first result-availability is a condition for starting command execution on a second subset of the processing units 11, 12, wherein the first subset contains at least one processing unit 11, 12 not contained in the second subset, or in other words, the second subset contains at most some, but not all of the processing units 11, 12 of the first subset.

The dependencies 30 further comprise a second result-availability which is an availability of further one or more results written into the memory 14, wherein the second result-availability is a condition for continuing command execution on the at least one processing unit 11, 12 not contained in the second subset. The second result-availability can be the availability of the results of the second subset, but this is not necessary; any subsequent result-availability in the processing graph may constitute a condition for such command execution continuing. In this way, a potential idle gap would be present, without the invention, on the at least one processing unit 11, 12 not contained in the second subset.

The term subset is to be interpreted in its broadest possible meaning; generally, it can consist of one, some, or all of the processing units 11, 12 of the multi-core neural network accelerator 10., An exemplary first result-availability in Figs. 3 to 5 is the finished processing of Cmd 2 and Cmd 3 on processing units Core 0 and Core 1, both being, e.g., of convolutional type. In the depicted example, the condition of the first result-availability is fulfilled when the timeline reaches the right side of the blocks of Cmd 2 and Cmd 3 representing the respective command executions. An exemplary second result-availability in Figs. 3 to 5 is the finished processing of Cmd 5 on processing unit Core 2 being, e.g., of pooling type. It is noted that execution times of parallel executed commands are not necessarily equal, as schematically depicted for simplicity, so in case a result-availability is constituted by the availability of more than one result, then result-availability prevails upon the last of those becomes available.

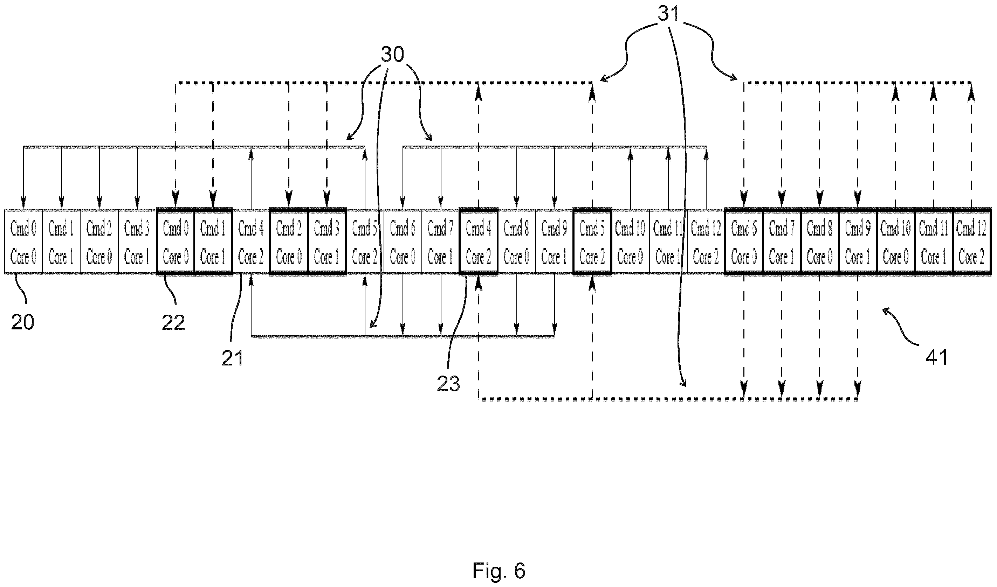

As illustrated in Fig. 6, the scheduling of the commands 20, 21, 22, 23 by the command scheduler 13 is determined by a merged command schedule 41 maintaining the dependencies within the respective processing task flows. The merged command schedule 41 includes, for the at least one processing unit 11, 12 not contained in the second subset and between the first and second result-availabilities of the first processing task flow, a scheduled start of execution of at least one command 22, 23 of the at least one further processing task flow.

By filling - at least partly - the gaps or idle time periods as above, latency times of the processing units 11, 12 can be reduced. The invention utilizes the fact that the processing units 11, 12 serve for executing universal commands, into which each and every processing task flow can be compiled. By means of corresponding scheduling and memory handling, commands belonging to different processing task flows can be scheduled in an interleaved or merged command schedule 41 as illustrated in Fig. 6.

Fig. 5 also illustrates that commands 22, 23 from the second processing task flow are scheduled into the idle period gaps of the first processing task flow, without affecting the dependencies of the commands of the second processing task flow. In this way, the two workloads can be completed in a shorter time t2 <= t1 + t1 than in the case of sequential execution; in a given example, t2 = 16.37 ms has been achieved.

As illustrated in Figs. 5 and 6, the at least one further processing task flow also comprises dependencies 31 comprising result-availability conditions, and scheduling of the commands 22, 23 of the at least one further processing task flow can be carried out by maintaining the dependencies 31, while being merged with the first processing task flow by means of the merged command schedule 41.

The invention enables the insertion of more than one command into a gap, which is an advantageous embodiment in case the gaps or idle time periods are longer or substantially longer than the execution time of individual insertable commands. In an even more preferred embodiment, at least some gaps are entirely filled, i.e., the method may comprise inserting subsequent commands 22, 23 of the at least one further processing task flow into the same gap. Of course, more or less commands may also be inserted into a gap; in case the total execution time of the inserted subsequent commands 22, 23 is longer than the gap, then the start of the subsequent command execution is delayed until the end of the total execution time of the inserted subsequent commands 22, 23. Because of the interleaved processing and reduced total idle time, total processing time will be reduced in such cases as well. It is possible to establish specific rules for the filling up of the gaps, e.g. effecting a maximum filling up while there is no delay of the start of the subsequent command execution.

Fig. 1 also shows that the multi-core neural network accelerator 10 may further comprise a command schedule merger unit 15, and the method preferably further comprises generating the merged command schedule 41 by the command schedule merger unit 15 for the command scheduler 13 based on the dependencies 30, 31 and on the above mentioned command inclusions or insertions.

As depicted with the dashed line arrows in Figs. 1 and 3, scheduling is preferably carried out on the basis of result-availability information communicated by each of the processing units 11, 12 to the command scheduler 13.

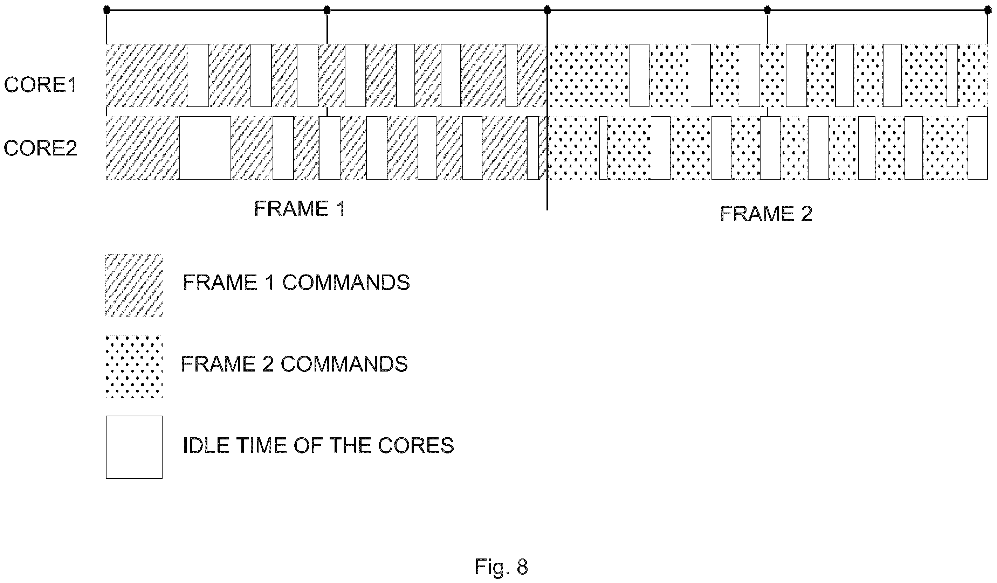

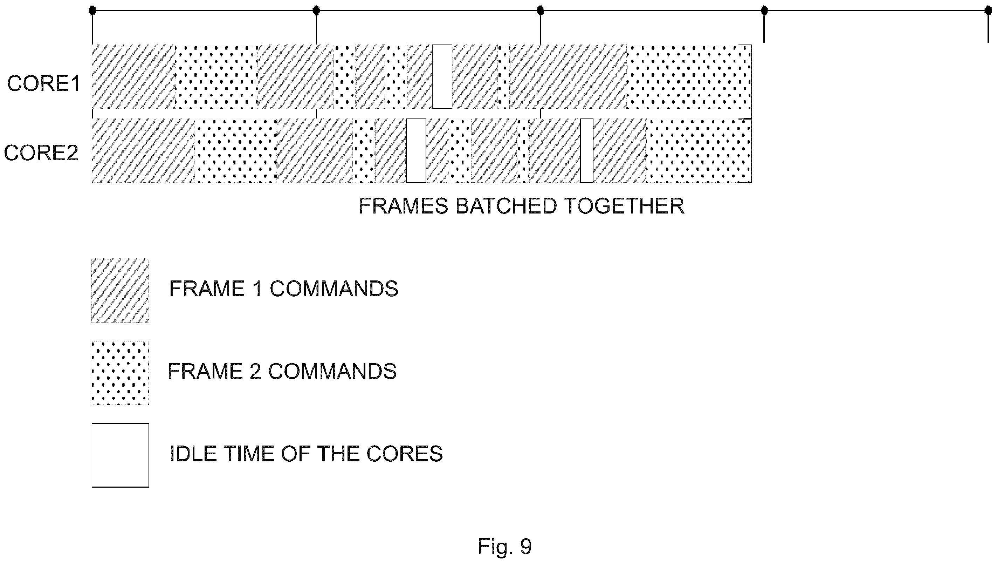

Figs. 8 and 9 illustrate another example of serial and interleaved processing of two frames by a multi-core neural network accelerator 10, by which the idle times of the processing units 11, 12 can be reduced and total processing time can be shortened.

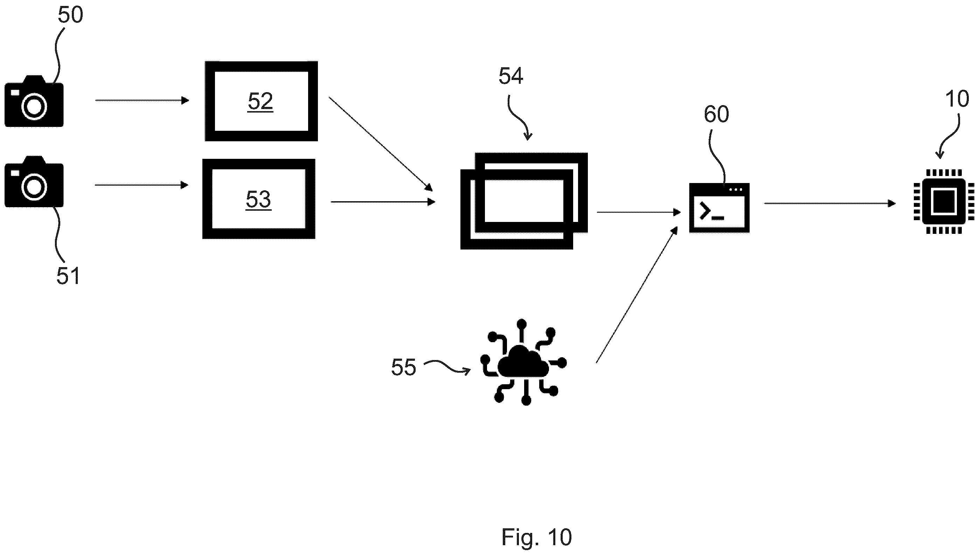

Fig. 10 illustrates a schematic example of processing two frames or images 52, 53 of two cameras 50, 51 with the same neural network 55, in line with the invention. This diagram shows the process of batching the two different camera images 52, 53 into one workload 54, constituted by the batched input frames. The compile part is an offline process, where the neural network 55 is transformed into a set 60 of instructions, which instructions are fully equivalent to the functioning of the neural network 55, and can be interpreted by the target hardware, i.e., by the multi-core neural network accelerator 10. The set 60 of instructions can be called an "application" or a "binary" that can be run by the hardware. If this binary is loaded into the target hardware's memory 14 and run on some input images 52, 53, then the neural network 55 is executed on the target hardware, which is called execution.

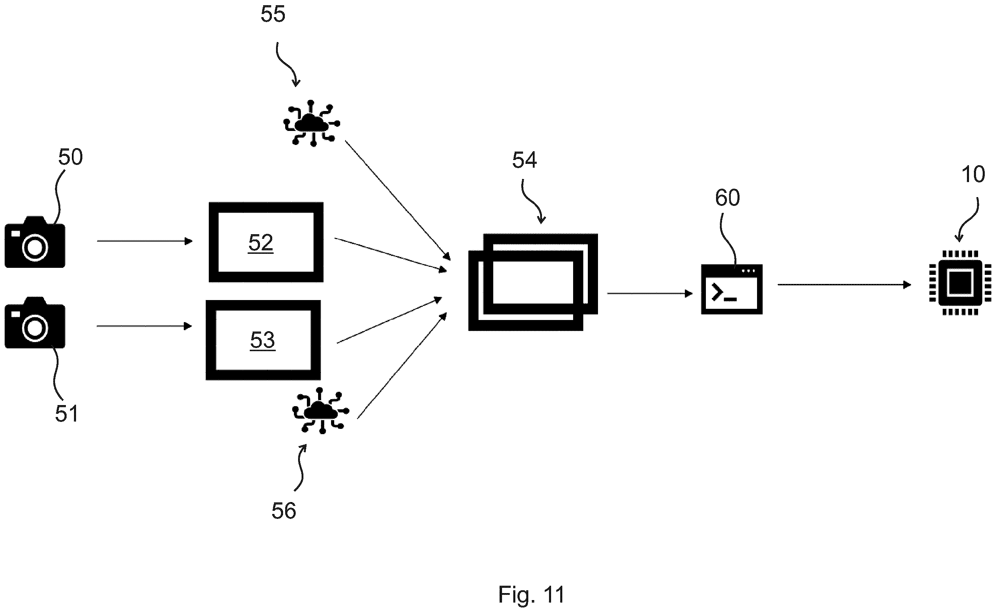

Fig. 11 illustrates a schematic example of processing two frames or images 52, 53 of two cameras 50, 51 with two neural networks 55, 56, in line with the invention. Here two different camera images 52, 53 are batched, one image 52 with one of the neural networks 55, 56 and the other image 53 with the other neural network 55, 56 into one workload 54. There can be many other use cases, these are only two examples.

The second use case depicted in Fig. 11 is an example of not only batching multiple frames, but also batching two (or more) neural networks. For example, on a self-driving car, there can be two camera streams, one that monitors the road and uses the image to self-drive a car and another camera that monitors the driver to see if the hands are on the steering wheel and if the driver is not asleep. These two camera images or camera streams are to be processed practically simultaneously with two different neural networks, as we need a model to keep the car on the road and a different one to decide if a person is awake/conscious. Then the two neural networks 55, 56 are compiled to run as a merged workload on the multi-core neural network accelerator 10. This way, when the processing of the first camera image 52 with the first neural network 55 (which contributes to the self-driving of the car with an outward-facing camera) reaches a point where it should be waiting, the scheduler 13 will be able to schedule and start processing the second camera image 53 with the commands of the second neural network 56, which is inward looking to see whether the driver is awake.

Of course, it is also possible to include more than two frames, images, image series, or streams in a merged workload. The above examples show batching of two frames for simplicity, but the invention also works the same way for batching more than two processing task flows.

Accordingly, in a preferred embodiment, the first processing task flow and the at least one further processing task flow are image processing task flows, and by means of these processing task flows
- the images 52, 53 from the two or more cameras 50, 51 are processed with the same neural network 55,
- the images 52, 53 from the two or more cameras 50, 51 are processed with the more than one neural network 55, 56, or
- the same image 52, 53 is processed with the more than one neural network 55, 56.

In the processing method preferably each command 20, 21, 22, 23 has a unique command ID and each processing unit 11, 12 has a unique processing unit ID, and the merged command schedule 41 comprises command ID and processing unit ID pairs. The pairs are preferably determined by the command schedule merger unit 15.

According to a second aspect, the invention is a processing system comprising a multi-core neural network accelerator 10 with a processor adapted to perform the steps of the inventive processing method.

According to a further aspect, the invention is a computer program product comprising instructions which, when the program is executed by a computer, cause the computer to carry out the steps of the inventive processing method.

According to a still further aspect, the invention is a computer-readable medium comprising instructions which, when executed by a computer, cause the computer to carry out the steps of the inventive processing method.

Embodiments of the invention can take the form of an entirely hardware embodiment, an entirely software embodiment or an embodiment including both hardware and software elements. An embodiment may be implemented in software, which includes but is not limited to firmware, resident software, microcode, etc.

In summary, if multiple workloads are available at a given time, then these workloads can be merged into one merged workload, and when no command can be scheduled to a core from the first workload, then the invention tries to schedule a command from a second workload. This reordering of the commands of the original workloads prevents or reduces idle times of the cores, significantly increasing utilization.

The industrial applicability of the invention follows from the above-detailed description, with the following general advantages. Firstly, the runtime decreases; therefore, efficiency increases without any hardware change. The essence of this technology is that the batched execution is a software optimization, so there is no need to change anything in the hardware, which would be expensive and time-consuming. Secondly, the invention is widely applicable: multiple frames from different cameras, different neural networks, or even multiple frames and different neural networks (e.g., two camera inputs processed by two different neural networks) can be batched in the disclosed framework.

This written description uses examples to disclose the subject matter, and also to enable any person skilled in the art to practice the subject matter, including making and using any devices or systems and performing any incorporated methods. The patentable scope is defined by the claims and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A processing method for carrying out a first processing task flow and at least one further processing task flow on a multi-core neural network accelerator (10) having processing units (11, 12), a command scheduler (13), and a memory (14),
wherein each processing task flow comprises commands (20, 21, 22, 23) and dependencies (30) between at least some of the commands (20, 21, 22, 23) of the processing task flow,
each command (20, 21, 22, 23) being executed by one particular processing unit (11, 12) by being scheduled by the command scheduler (13) to the particular processing unit (11, 12) for execution, wherein a data input for the scheduled command execution is read from the memory (14) by the particular processing unit (11, 12) and a result of the executed command (20, 21, 22, 23) is written into the memory (14) by the particular processing unit (11, 12),
wherein the dependencies (30) comprise
- a first result-availability being an availability of one or more results written into the memory (14) by a first subset of the processing units (11, 12), the first result-availability being a condition for starting command execution on a second subset of the processing units (11, 12), the first subset containing at least one processing unit (11, 12) not contained in the second subset, and
- a second result-availability being an availability of further one or more results written into the memory (14), the second result-availability being a condition for continuing command execution on the at least one processing unit (11, 12) not contained in the second subset,
wherein
said scheduling of the commands (20, 21, 22, 23) by the command scheduler (13) is determined by a merged command schedule (41) maintaining the dependencies within the respective processing task flows, the merged command schedule (41) including, for the at least one processing unit (11, 12) not contained in the second subset and between the first and second result-availabilities of the first processing task flow, a scheduled start of execution of at least one command (22, 23) of the at least one further processing task flow.

2. The processing method according to claim 1, wherein the multi-core neural network accelerator (10) further comprises a command schedule merger unit (15), and the method further comprises generating the merged command schedule (41) by the command schedule merger unit (15) for the command scheduler (13) based on the dependencies (30, 31) and the inclusions.

3. The processing method according to claim 1 or claim 2, wherein scheduling is carried out on the basis of result-availability information communicated by each of the processing units (11, 12) to the command scheduler (13).

4. The processing method according to any of claims 1 to 3, wherein the multi-core neural network accelerator (10) has at least one processing unit (11) of a first type and at least one processing unit (12) of a second type different from the first type.

5. The processing method according to claim 4, wherein the at least one processing unit (11) of the first type is a convolutional processing unit, and at least one processing unit (12) of a second type is a processing unit adapted to carry out pooling.

6. The processing method according to any of claims 1 to 5, wherein the first processing task flow and the at least one further processing task flow are image processing task flows, and by means of these processing task flows
- images (52, 53) from two or more cameras (50, 51) are processed with the same neural network (55),
- images (52, 53) from two or more cameras (50, 51) are processed with more than one neural network (55, 56), or
- the same image (52, 53) is processed with more than one neural network (55, 56).

7. The processing method according to any of claims 1 to 6, wherein each command (20, 21, 22, 23) has a unique command ID and each processing unit (11, 12) has a unique processing unit ID, and wherein the merged command schedule (41) comprises command ID and processing unit ID pairs.

8. The processing method according to claim 7, wherein the pairs are determined by the command schedule merger unit (15).

9. A processing system comprising a multi-core neural network accelerator (10) with a processor adapted to perform the steps of the processing method of claim 1.

10. A computer program product comprising instructions which, when the program is executed by a computer, cause the computer to carry out the steps of the processing method of claim 1.

11. A computer-readable medium comprising instructions which, when executed by a computer, cause the computer to carry out the steps of the processing method of claim 1.
